# NEUE EUROPÄISCHE PATENTSCHRIFT

(11) **EP 2 556 629 B2**
(45) Veröffentlichungstag und Bekanntmachung des Hinweises auf die Entscheidung über den Einspruch: **02.01.2019**
(45) Hinweis auf die Patenterteilung: 04.11.2015
(21) Anmeldenummer: 11709374.0
(22) Anmeldetag: 11.03.2011
(51) Int. Cl.: H04L 12/28, H04N 7/10, H04N 7/18, H04L 29/06

(54) **HAUSKOMMUNIKATIONS-GATEWAY**
DOMESTIC COMMUNICATION GATEWAY
PASSERELLE DE COMMUNICATION DOMESTIQUE

(30) Priorität: 09.04.2010 DE 102010014471
(43) Veröffentlichungstag der Anmeldung: 13.02.2013
(73) Patentinhaber: GIRA GIERSIEPEN GmbH & Co. KG, D-42477 Radevormwald (DE)
(72) Erfinder: STEINMETZLER, Andreas, 51709 Marienheide (DE)
(74) Vertreter: Patent- und Rechtsanwälte Dr. Solf & Zapf
(86) Internationale Anmeldenummer: PCT/EP2011/053715
(87) Internationale Veröffentlichungsnummer: WO 2011/124441

(56) Entgegenhaltungen:
- EP-A1- 1 850 574
- US-A1- 2005 010 649
- US-A1- 2010 197 218

## Beschreibung

Die vorliegende Erfindung bezieht sich auf ein Verfahren zur Verwendung in einem Hauskommunikations-Gateway zur Kommunikation zwischen Türstationen und Wohnungsstationen an einem Hauskommunikationsbus und IP-Endgeräten in einem IP-Netzwerk, wobei analoge Audio- und/oder Videosignale von einem Hauskommunikationsbus in digitale Audio- und/oder Video-Datenströme umgewandelt und über mindestens eine IP-Netzwerk-Schnittstelle an mindestens ein IP-Endgerät weitergeleitet werden und/oder ein digitaler Audio-Datenstrom eines IP-Endgerätes von einem IP-Netzwerk in ein analoges Audio-Signal umgewandelt und über einen Hauskommunikationsbus an mindestens eine Türstation oder Wohnungsstation weitergeleitet wird. Außerdem bezieht sich die Erfindung auf ein Hauskommunikations-Gateway zur Verwendung des obigen Verfahrens.

Hauskommunikations-Gateways und Verfahren dieser Art werden zum Beispiel zwischen einem proprietären Hauskommunikationsbussystem und einem IP-Netzwerk, insbesondere zwischen einem Zweidraht-Bus-System und einem Ethernet-Netzwerk verwendet.

So ist zum Beispiel in der US2010/197218 A1 ein Verfahren offenbart, bei denen analoge Audio/Video-Signate von Türstationen mit Video-Kamera an einem Hauskommunikationsbus in digitale Audio/Video-Signale umgewandelt und an IP-Endgeräte in einem IP-Netzwerk weitergeleitet werden.

In der US2005/010649 A1 ist ein Verfahren beschrieben, bei dem analoge Kameras eines Hauskommunikations-Systems und digitale Kameras eines IP-Netzwerks in ein Sicherheits- und Videoüberwachungssystem eingebunden werden. Dabei werden die analogen Video-Signale in digitale Videodatenströme umgewandelt und an beliebige videofähige digitale IP-Endgeräte weitergeleitet.

In der EP 1850574 A1 ist ein Verfahren offenbart, bei dem ein analoges Audio-Signal einer Türstation an einem Hauskommunikationsbus in einen digitalen Audio-Datenstrom für eine VoIP-Telefonanlage umgewandelt wird. Außerdem wird gleichzeitig ein digitaler Video-Datenstrom einer Kamera an die VoIP-Telefonanlage übertragen, wobei der digitale Video-Datenstrom und der digitale Audio-Datenstrom zusammengeführt und an ein digitales VoIP-Telefongerät übertragen werden. Diese Hauskommunikations-Gateways und Verfahren dienen dazu, einen Medienwechsel von einem analogen proprietären System zu einem digitalen offenen System zu realisieren und die Sprach-, Bild- und Dateninformationen auf digitalen IP-Endgeräten als Wohnungsstationen wiederzugeben und dadurch herstellerspezifische Wohnungsstationen zu ersetzen oder zu ergänzen. Die Video-Signale der Bildinformationen entstammen hierbei jeweils Video-Kameras in den Türstationen des herstellerspezifischen (proprietären) Systems und werden in digitale Video-Datenströme umgewandelt und unidirektional über ein oder mehrere Hauskommunikations-Gateway(s) an die entsprechenden IP-Endgeräte weitergeleitet. Die Audio- und/oder Datenübertragung (wie zum Beispiel Schalthandlungen beim Türöffner) zwischen den Türstationen und den digitalen IP-Endgeräten ist bidirektional. Sollen ein Audio-Signal und ein Video-Signal einer Türstation an zwei unterschiedliche IP-Endgeräte übertragen werden (zum Beispiel Video an einen PC und Audio an ein SIP-Telefon), so muss ein zweites Hauskommunikations-Gateway eingesetzt werden. Bekannte Hauskommunikations-Gateways und Verfahren haben mehrere Nachteile. Insbesondere lassen sich analoge Türstationen nicht mit IP-Endgeräten kombinieren, um zum Beispiel eine Video-Funktion zu ergänzen. Außerdem können Video-Datenströme von IP-Endgeräten nicht auf analogen Wohnungstationen dargestellt werden. Die fallweise gewünschte Trennung von Bild und Audioinformationen auf einer digitalen SIP-Telefonanlage und Personal Computern lässt sich nur mit Hilfe von zwei Gateways realisieren.

Der Erfindung liegt daher die Aufgabe zugrunde, eine Lösung zu schaffen, die es ermöglicht, digitale IP-Endgeräte aller Art flexibel mit analogen Türstationen und analogen Wohnungsstationen bei gleichzeitig minimalem Komponenteneinsatz zu integrieren und zu kombinieren.

Bei einem Verfahren der eingangs beschriebenen Art wird die Aufgabe erfindungsgemäß durch die Merkmale des kennzeichnenden Teils des Anspruchs 1, 2 bzw. des Anspruchs 6 gelöst.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: ein Blockschaltbild eines erfindungsgemäßen Hauskommunikations-Gateways,
- Fig. 2: den Aufbau des analogen Video-Pfads im Hauskommunikations-Gateway,
- Fig. 3: eine schematische Darstellung einer typischen Anwendung eines erfindungsgemäßen Hauskommunikations-Gateways.

Gleiche Merkmale in den verschiedenen Figuren sind mit denselben Bezugszeichen versehen.

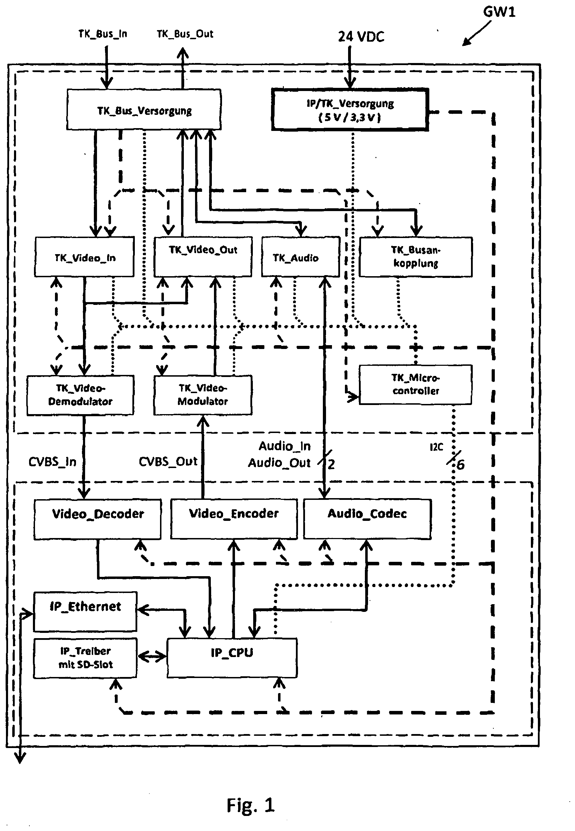

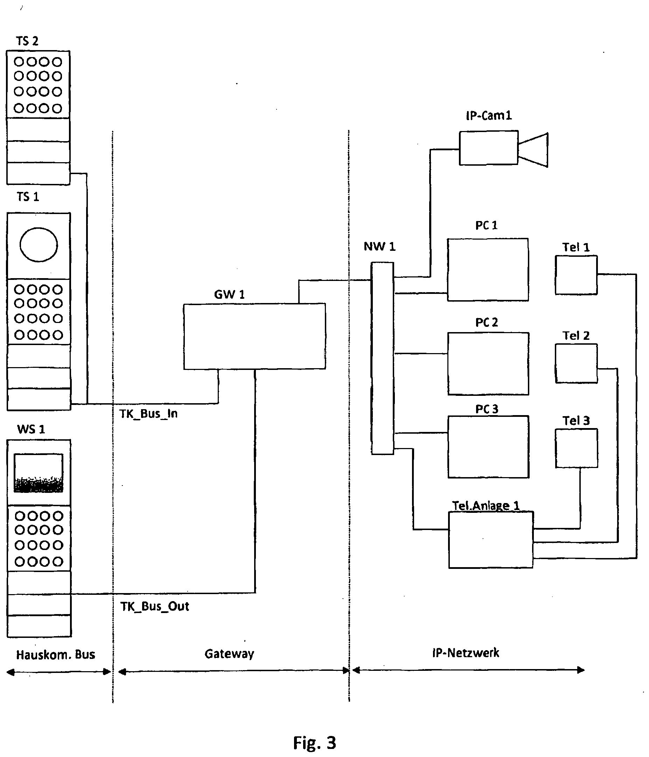

In Fig. 1 ist ein Blockschaltbild eines erfindungsgemäßen Hauskommunikations-Gateways GW1 dargestellt. Das Hauskommunikations-Gateway GW1 weist zwei analoge Hauskommunikationsbus-Schnittstellen auf, an denen jeweils ein Hauskommunikationsbus TK_Bus_In, TK_Bus_Out angeschlossen ist. Wie auch in Fig. 3 dargestellt, dient der Hauskommunikationsbus TK_Bus_In zum Anschluss von Türstationen TS1, TS2 mit Sprecheinrichtung und optionaler Videokamera. Der Hauskommunikationsbus TK Bus Out dient zum Anschluss von Wohnungsstationen WS1 mit Sprecheinrichtung und optionalem Videodisplay. Auf den Hauskommunikationsbussen TK_Bus_In, TK_Bus_Out werden jeweils Sprache als ein analoges Audio-Signal, Bild als ein analoges Video-Signal, Daten-Signale und Versorgungsspannung zu den einzelnen Türstationen TS1, TS2 oder Wohnungsstationen WS1 übertragen. Das Video-Signal beinhaltet als Video-Basisbandsignal Frequenzanteile von 25 Hz bis 5 MHz, die sich mit den Frequenzanteilen des analogen Audio-Signals überschneiden. Vorteilhafterweise wird deswegen das analoge Video-Signal frequenzmoduliert. Dazu wird es insbesondere auf einen Träger von 10 - 13 MHz moduliert und nimmt dann das nicht hörbare Frequenzband von 4 - 19 MHz ein. Alternativ könnte auch anstatt dem Video-Signal das Audio-Signal frequenzmoduliert werden.

Das Hauskommunikations-Gateway GW1 trennt den Hauskommunikationsbus in zwei Teilbusse TK_Bus_In und TK_Bus_Out auf und schleift sich in den Hauskommunikationsbus TK_Bus_In, TK_Bus_Out ein, so dass es sich einerseits gegenüber den Türstationen TS1, TS2 auf dem Hauskommunikationsbus TK_Bus_In wie eine Wohnungsstation WS1 verhalten kann, das heißt zum Beispiel Videosignale auf dem Hauskommunikationsbus TK_Bus_In empfangen kann, und sich andererseits bei Bedarf gegenüber den Wohnungsstationen WS1 auf dem Hauskommunikationsbus TK_Bus_Out wie eine Türstation TS1, TS2 verhalten kann, das heißt zum Beispiel Videosignale auf dem Hauskommunikationsbus TK_Bus_Out senden kann.

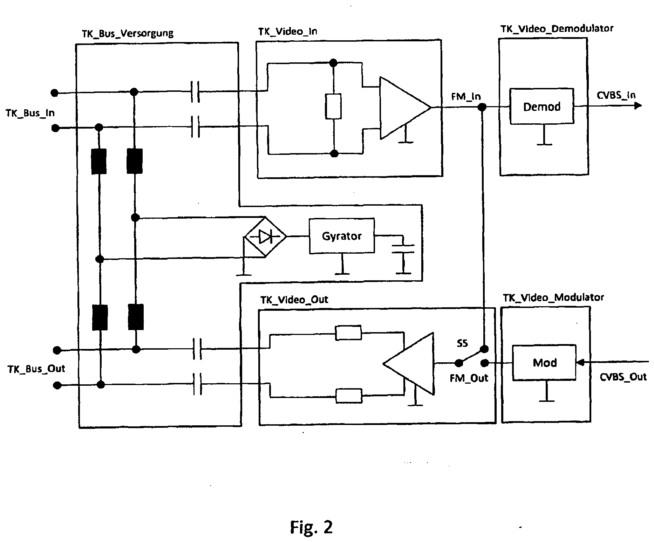

In Fig.2 ist der Aufbau des analogen Video-Pfads im Hauskommunikations-Gateway GW1 im Detail dargestellt. In diesem Ausführungsbeispiel besteht der Hauskommunikationsbus TK_Bus_In, TK_Bus_Out aus einem Zweidraht-Bus. Das Einschleifen in den Hauskommunikationsbus TK_Bus_In, TK_Bus_Out ist für das, insbesondere frequenzmodulierte, Video-Signal erforderlich, da dieses insbesondere bei den Frequenzen zwischen 4 MHz und 19 MHz aus leitungstheoretischen Gründen (Reflexion) einen Leitungsabschluss- bzw. einen Leitungsendwiderstand benötigt. Das von einer Türstation TS1, TS2 kommende analoge Video-Signal gelangt dazu über den Hauskommunikationsbus TK_Bus_In in das Hauskommunikations-Gateway GW1 und wird in der Busversorgungseinheit TK_Bus_Versorgung von den anderen Bussignalen (Spannungsversorgung, Audio-Signal und Daten-Signal) getrennt und der Video-Eingangsstufe TK_Video_In zugeführt. In der Busversorgungseinheit TK_Bus_Versorgung werden die Spannungsversorgung, Audio- und Daten-Signale über die vier Induktivitäten direkt zwischen dem Hauskommunikationsbus TK_Bus_In und TK_Bus_Out übertragen. In der Video-Eingangsstufe TK_Video_In wird der Hauskommunikationsbus TK_Bus_In von einem Leitungsabschlusswiderstand abgeschlossen.

In einem ersten Anwendungsbeispiel wird das von der Türstation TS1, TS2 kommende analoge Video-Signal direkt an eine Wohnungsstation WS1 auf dem Hauskommunikationsbus TK_Bus_Out weitergeleitet. In diesem Anwendungsbeispiel agiert das Hauskommunikations-Gateway GW1 lediglich als analoge Brücke zwischen den beiden Hauskommunikationsbussen TK_Bus_In und TK_Bus_Out. Dazu wird das analoge Video-Signal von der Video-Eingangsstufe TK_Video_In verstärkt und direkt an eine Video-Ausgangsstufe TK_Video_Out geleitet. Insbesondere befindet sich in der Video-Ausgangstufe TK_Video_Out ein Umschalter S5, der zwischen dem von der Video-Eingangsstufe TK_Video_In zugeleiteten Video-Signal FM_In und dem von dem Hauskommunikations-Gateway GW1 zu sendenden Video-Signal FM_Out schaltet. In diesem Ausführungsbeispiel schaltet der Umschalter S5 auf das zugeleitete Video-Signal FM_In von der Video-Eingangsstufe TK_Video_In.

In einem zweiten Anwendungsbeispiel werden das von der Türstation TS1, TS2 am Hauskommunikationsbus TK_Bus_In kommende analoge Video-Signal und das analoge Audio-Signal an ein digitales IP-Endgerät PC1, PC2, PC3, Tel1, Tel2, Tel3, das als digitale Wohnungsstation agiert, in einem an dem Hauskommunikations-Gateway GW1 angeschlossenen IP-Netzwerk weitergeleitet. In diesem Ausführungsbeispiel agiert das Hauskommunikations-Gateway GW1 als virtuelle analoge Wohnungsstation gegenüber der Türstation TS1, TS2 auf dem Hauskommunikationsbus TK_Bus_In und als virtuelle digitale Türstation gegenüber dem IP-Endgerät PC1, PC2, PC3, Tel1, Tel2, Tel3 in dem IP-Netzwerk. Wie in Fig. 1 ersichtlich, wird dafür das analoge Video-Signal von der Video-Eingangsstufe TK_Video_In insbesondere an den Video-Demodulator TK_Video_Demodulator weitergegeben, der es in seinen ursprünglichen Frequenzbereich, insbesondere zwischen 25 Hz bis 5 MHz, in ein Video-Basisbandsignal CVBS_In wandelt. Alternativ könnte dies anstatt mit dem Video-Signal mit dem Audio-Signal gemacht werden. Das Video-Basisbandsignal CVBS_In wird nach dem Video-Demodulator TK_Video_Demodulator im Video-A/D-Wandler Video_Decoder in einen digitalen Video-Datenstrom, insbesondere einen Video-Datenstrom mit dem Format YCbCr gemäß ITU-R 656, umgewandelt und an den Prozessor IP_CPU zur Weiterverarbeitung übergeben. Der Prozessor IP_CPU rechnet den Farbraum des Video-Datenstroms in einen RGB Farbraum um. Insbesondere wird auch falls nötig die Bildschirmauflösung auf ein Standardformat, insbesondere auf eine CIF-Bildschirmauflösung, skaliert. Danach versieht der Prozessor IP_CPU den Video-Datenstrom mit einer Zeitcodierung und wandelt ihn vorteilhafterweise in einen digitalen komprimierten Video-Datenstrom, insbesondere einen H.264 Datenstrom, um. Parallel zum Video-Signal wird von der Busversorgungseinheit TK_Bus_Versorgung das analoge Audio-Signal des Hauskommunikationsbusses TK_Bus_In, TK_Bus_Out an eine Audio-Einheit TK_Audio weitergeleitet. Die Audio-Einheit TK_Audio spaltet von dem Audio-Signal ein Audio-Eingangssignal Audio_In ab. Das Audio-Eingangssignal Audio_In wird an einen Audio A/D-Wandier in einem Audio-Prozessor Audio_Codec übertragen, der das analoge Audio-Eingangssignal Audio_In in einen digitalen Audio-Datenstrom, insbesondere in einen AC97 Datenstrom, umwandelt, und zur Weiterverarbeitung an den Prozessor IP_CPU übergibt. Insbesondere versieht der Prozessor IP_CPU den Audio-Datenstrom mit einer Zeitcodierung und verschiebt ihn zeitlich relativ zur Zeitcodierung des Video-Datenstroms um die Länge der Verarbeitungs- beziehungsweise Durchlaufszeitdifferenz, so dass der Video-Datenstrom und der Audio-Datenstrom lippensynchron zueinander angepasst sind. Danach werden der digitale Audio-Datenstrom und der digitale Video-Datenstrom zu einem digitalen Audio/Video-Datenstrom zusammengeführt. Zusätzlich weist das Hauskommunikations-Gateway GW1 eine IP-Netzwerk-Schnittstelle IP_Ethernet, insbesondere eine Ethernet-Schnittstelle, auf, die mit dem Prozessor IP_CPU einerseits und mit dem IP-Netzwerk andererseits verbunden ist, und über die der Prozessor IP_CPU mit den IP-Endgeräten PC1, PC2, PC3, Tel1, Tel2, Tel3 kommuniziert. Der Prozessor IP_CPU versendet den von analog nach digital umgewandelten digitalen Audio- und/oder Video-Datenstrom der Türstation TS1, TS2 des Hauskommunikationsbusses TK_Bus_In über die IP-Netzwerk-Schnittstelle IP_Ethernet mittels mehrerer IP-Unicast-Streams oder über einen Multicast-Stream an mehrere IP-Endgeräte PC1, PC2, PC3, Tel1, Tel2, Tel3 gleichzeitig oder mittels eines IP-Unicast-Streams an ein IP-Endgerät PC1, PC2, PC3, Tel1, Tel2, Tel3. Die Verbindungen zu den IP-Endgeräten c werden über TCP/IP basierte Verbindungsprotokolle, insbesondere über RTP und/oder SIP/SDP, aufgebaut. Parallel wird als Sprachkanal ein digitaler Audio-Datenstrom, insbesondere im g711 Format, von dem IP-Endgerät PC1, PC2, PC3, Tel1, Tel2, Tel3 über die IP-Schnittstelle zu dem Hauskommunikations-Gateway GW1 übertragen. Dieser digitale Audio-Datenstrom wird von dem Prozessor IP_CPU in ein unkomprimiertes Audio-Format, insbesondere in das AC97 Format, umgewandelt und an den Audio-Prozessor Audio_Codec übergeben und dort von einem D/A-Wandler in ein analoges Audio-Ausgangssignal Audio_Out umgewandelt. Das Audio-Ausgangssignal Audio_Out wird an die Audio-Einheit TK_Audio weitergeleitet. Die Audio-Einheit TK_Audio mischt das Audio-Ausgangssignal Audio_Out zu dem analogen Audio-Signal des Hauskommunikationsbusses TK_Bus_In, TK_Bus_Out hinzu. Vorteilhafterweise weist dabei der Prozessor IP_CPU eine Line-Echo-Cancellation Funktion auf, die es verhindert, dass das Audio-Ausgangssignal an das ursprüngliche IP-Endgerät PC1, PC2, PC3, Tel1, Tel2, Tel3 zurück übertragen wird.

In einem dritten Anwendungsbeispiel wird ein digitaler Audio- und/oder Video-Datenstrom von einem IP-Endgerät PC1, PC2, PC3, Tel1, Tel2, Tel3, das als digitale Türstation agiert, durch das Hauskommunikations-Gateway GW1 zu den Wohnungstationen an dem Hauskommunikationsbus TK_Bus_Out weitergeleitet. In diesem Ausführungsbeispiel agiert das Hauskommunikations-Gateway GW1 als virtuelle digitale Wohnungsstation gegenüber dem IP-Endgerät PC1, PC2, PC3, Tel1, Tel2, Tel3 und als virtuelle analoge Türstation gegenüber der analogen Wohnungsstation WS1 auf dem Hauskommunikationsbus TK_Bus_Out. Dazu baut das IP-Endgerät zu dem Hauskommunikations-Gateway GW1, insbesondere zu dem Prozessor IP_CPU eine digitale Verbindung auf und empfängt den digitalen Audio- und/oder Video-Datenstrom über die IP-Netzwerkschnittstelle IP_Ethernet. Insbesondere wird dazu der digitale Video-Datenstrom je nach Ausgangsformat im IP-Endgerät, wie zum Beispiel H.263, H.264 oder MPEG 4 zunächst von dem Prozessor IP_CPU in einen unkomprimierten Video-Datenstrom, insbesondere in einen RGB-Video-Datenstrom umgewandelt, wobei unter Umständen der Farbraum nach RGB umgerechnet wird. Insbesondere wird auch, falls nötig, die Bildschirmauflösung auf ein Standardformat, insbesondere auf eine CIF-Bildschirmauflösung, skaliert. Danach wird der digitale Video-Datenstrom von dem Prozessor IP_CPU an einen Video-D/A-Wandler Video_Encoder übergeben und in diesem zu einem analogen Video-Basisbandsignal CVBS_Out, insbesondere zu einem CVBS-Video-Signal, gewandelt. Vorteilhafterweise wird dieses Signal durch einen Video-Modulator TK_Video_Modulator in ein hohes Frequenzband, insbesondere zwischen 4 MHz und 19 MHz, moduliert und an eine Video-Endstufe TK_Video_Out übertragen, in der es verstärkt und an den Hauskommunikationsbus angepasst wird. Alternativ könnte dies anstatt mit dem Video-Signal mit dem Audio-Signal gemacht werden. Danach wird es an die Busversorgungseinheit TK_Bus_Versorgung übertragen und dort mit den anderen Bussignalen gemischt und über den Hauskommunikationsbus TK_Bus_Out zu den Wohnungsstationen gesendet. Der digitale Audio-Datenstrom wird zunächst, falls nicht schon in dem IP-Endgerät geschehen, in ein Standard Audio-Format, insbesondere in einen AC97 Datenstrom, umgewandelt. Der digitale Audio-Datenstrom wird wie in dem zweiten Ausführungsbeispiel von dem Prozessor IP_CPU über den Audio-Prozessor Audio_Codec in ein analoges Audio-Signal umgewandelt und mittels der Audio-Einheit TK_Audio auf den Hauskommunikationsbus TK_Bus_In, TK_Bus_Out übertragen.

In einem vierten Anwendungsbeispiel wird durch das Hauskommunikations-Gateway GW1 das analoge Audio-Signal einer analogen Türstation TS2 ohne Video-Funktion mit einem digitalen Video-Datenstrom eines ersten digitalen IP-Endgerätes IPCam-1 mit Video-Funktion kombiniert und an ein zweites digitales IP-Endgerät PC1, PC2, PC3, Tel1, Tel2, Tel3 weitergeleitet. In diesem Anwendungsbeispiel agiert das Hauskommunikations-Gateway GW1 als virtuelle analoge Wohnungsstation gegenüber der Türstation TS2 auf dem Hauskommunikationsbus TK_Bus_In und als virtuelle digitale Wohnungsstation gegenüber dem ersten IP-Endgerät IP-Cam1 und als virtuelle digitale Türstation gegenüber dem zweiten IP-Endgerät PC1, PC2, PC3, Tel1, Tel2, Tel3. Dabei verarbeitet der Prozessor IP_CPU das in einen digitalen Audio-Datenstrom umgewandelte analoge Audio-Signal der Türstation TS2 des Hauskommunikationsbusses TK_Bus_In und den digitalen Video-Datenstrom eines ersten IP-Endgerätes IP-Cam1 des IP-Netzwerks, wie zum Beispiel einer IP-Kamera, zu einem zusammengeführten digitalen Audio/Video-Datenstrom und leitet den zusammengeführten digitalen Audio/Video-Datenstrom, wie bereits in dem zweiten Anwendungsbeispiel beschrieben, über die IP-Netzwerk-Schnittstelle IP_Ethernet an das zweite IP-Endgerät PC1, PC2, PC3, Tel1, Tel2, Tel3 weiter.

In einem fünften Anwendungsbeispiel wird durch das Hauskommunikations-Gateway GW1 das analoge Audio-Signal einer analogen Türstation TS2 ohne Video-Funktion mit einem digitalen Video-Datenstrom eines ersten digitalen IP-Endgerätes IPCam-1 mit Video-Funktion kombiniert und an eine analoge Wohnungsstation WS1 auf dem Hauskommunikationsbus TK_Bus_Out weitergeleitet. In diesem Anwendungsbeispiel agiert das Hauskommunikations-Gateway GW1 als virtuelle analoge Wohnungsstation gegenüber der Türstation TS2 auf dem Hauskommunikationsbus TK_Bus_In und als virtuelle digitale Wohnungsstation gegenüber dem IP-Endgerät IP-Cam1 und als virtuelle analoge Türstation gegenüber der analogen Wohnungsstation WS1 auf dem Hauskommunikationsbus TK_Bus_Out. Dabei leitet der Prozessor IP_CPU den, wie im vierten Anwendungsbeispiel zusammengeführten, digitalen Audio/Video-Datenstrom, der aus dem analogen Audio-Signal der Türstation TS2 und dem digitalen Video-Datenstrom des IP-Endgerätes IP-Cam1 erzeugt wurde, als ein analoges Audio/Video-Signal an die Wohnungsstation WS1 in dem Hauskommunikationsbus TK_Bus_Out weiter. Dazu teilt der Prozessor IP_CPU zunächst den zusammengeführten digitalen Audio/Video-Datenstrom in einen digitalen Video-Ausgangsdatenstrom und einen digitalen Audio-Ausgangsdatenstrom auf. Der Prozessor IP_CPU wandelt den digitalen Video-Ausgangsdatenstrom und den digitalen Audio-Ausgangsdatenstrom, wie bereits im dritten Ausführungsbeispiel beschrieben, in ein analoges Video-Signal und ein analoges Audio-Signal um, und überträgt diese auf den Hauskommunikationsbus TK_Bus_Out.

Mehrere Anwendungsbeispiele können auch kombiniert werden. So kann zum Beispiel das vierte und fünfte Anwendungsbeispiel kombiniert werden, so dass sowohl ein analoges Audio- und Video-Signal für die Wohnungsstation WS1 auf dem analogen Hauskommunikationsbus TK_Bus_In, TK_Bus_Out als auch ein digitaler Audio- und Video-Datenstrom für das zweite IP-Endgerät PC1, PC2, PC3, Tel1, Tel2, Tel3 auf der IP-Netzwerk-Schnittstelle parallel von dem Hauskommunikations-Gateway GW1 ausgegeben wird.

Außerdem weist das Hauskommunikations-Gateway GW1 eine Busankopplungseinheit TK_Busankopplung auf, die aus dem analogen Daten-Signal des Hauskommunikationsbusses TK_Bus_In, TK_Bus_Out digitale Steuerdaten erzeugt und an einen Mikrocontroller TK_Microcontroller zur Weiterverarbeitung weiterleitet oder digitale Steuerdaten von dem Mikrocontroller TK_Microcontroller in analoge Daten-Signale umwandelt und auf dem Hauskommunikationsbus TK_Bus_In, TK_Bus_Out ausgibt. Der Mikrocontroller TK_Microcontroller steuert außerdem über zusätzliche Datenverbindungen, die als gepunktete Linien in Fig. 1 eingezeichnet sind, die Funktionen der einzelnen analogen Elemente zur Video- und Audio-Verarbeitung und zur Steuerung des Hauskommunikationsbusses TK_Bus_In, TK_Bus_Out und der Stromversorgung. Der Mikrocontroller TK_Microcontroller ist auch zum Austausch von Steuerdaten mit dem Prozessor IP_CPU, insbesondere über einer I2C Verbindung, verbunden.

Zur Übertragung des Video-Signals ist die Versorgung des Hauskommunikations-Gateways GW1 mit Spannung erforderlich. Die Versorgungsleitungen sind in Fig.1 als gestrichelte Linien eingezeichnet. Das Hauskommunikations-Gateway GW1 kann aber aufgrund seiner hohen Stromaufnahme nicht komplett aus dem Hauskommunikationsbus TK_Bus_In, TK_Bus_Out gespeist werden. Aus diesem Grund wird es aus einer separaten Spannungsversorgung IP/TK_Versorgung, insbesondere mit 24 V DC, gespeist. Um die Video-Übertragung im analogen Hauskommunikationsbus TK_Bus_In, TK_Bus_Out auch bei ausgefallener separater Spannungsversorgung IP/TK_Versorgung zu gewährleisten, werden die für die analoge Video-Signalübertragung wichtigen Einheiten, insbesondere die Video-Eingangsstufe TK_Video_In und die Video-Ausgangsstufe TK_Video_Out alternativ aus dem Hauskommunikationsbus TK_Bus_In, TK_Bus_Out versorgt. Diese Busversorgung wird vom Steuerungsprozessor TK_Microcontroller aktiviert, sobald dieser den Ausfall der separaten Spannungsversorgung IP/TK_Versorgung erkennt. Dazu ist es erforderlich, dass auch der Steuerungsprozessor TK_Microcontroller alternativ aus dem Hauskommunikationsbus TK_Bus_In, TK_Bus_Out gespeist wird. Dieser kann mit dem ebenfalls noch versorgten Busankoppler TK_Busankoppler, welcher zum Senden und Empfangen der Daten auf dem Hauskommunikationsbus TK_Bus_In, TK_Bus_Out dient, weiterhin mit den Busteilnehmern kommunizieren und im Falle des Ausfalls der separaten Spannungsversorgung IP/TK_Versorgung eine Meldung an einen speziellen Teilnehmer (z.B. ein Steuergerät) senden.

In Fig. 3 ist eine typische Anwendung eines erfindungsgemäßen Hauskommunikations-Gateways GW1 dargestellt. Bei dieser Anwendung sind zwei Türstationen TS1, TS2 über einen Hauskommunikationsbus TK_Bus_In an das Hauskommunikations-Gateway GW1 angeschlossen. Die Türstation TS1 hat Daten, Audio und Video-In Funktionen durch eine Tastatur, einen Lautsprecher, ein Mikrofon und eine Videokamera. Die Türstation TS2 hat lediglich Daten und Audio Funktionen durch eine Tastatur, einen Lautsprecher und ein Mikrofon. Außerdem ist eine Wohnungsstation WS1 über einen Hauskommunikationsbus TK_Bus_Out an das Hauskommunikations-Gateway GW1 angeschlossen. Die Wohnungsstation WS1 hat Daten, Audio und Video-Out Funktionen durch eine Tastatur, einen Lautsprecher, ein Mikrofon und ein Videodisplay. Zusätzlich ist das Hauskommunikations-Gateway GW1 durch seine IP-Netzwerk-Schnittstelle IP_Ethernet mit einem IP-Netzwerk über zum Beispiel einen Ethernet-Netzwerkswitch NW1 verbunden. In dem IP-Netzwerk sind mehrere IP-Endgeräte, wie zum Beispiel mehrere Personal Computer PC1, PC2, PC3, eine IP-Video-Kamera IP-Cam1 und eine SIP-Telefonanlage, mit mehreren Standard SIP-Telefonen Tel1, Tel2, Tel3, angeschlossen. Das erfindungsgemäße Hauskommunikations-Gateway GW1 ermöglicht es, zum Beispiel das Audio- und Video-Signal der Türstation TS1 sowohl auf die Wohnungsstation WS1 analog zu übertragen, als auch auf einen der Personal Computer PC1, PC2, PC3 digital zu übertragen. Dabei ist es auch möglich, per IP-Multicast-Verbindung den digitalen Video-Datenstrom an mehrere Personal-Computer gleichzeitig zu übertragen. Außerdem ist es möglich, das Audio-Signal und das Video-Signal an verschiedene IP-Endgeräte zu übertragen. So wird zum Beispiel das Audio-Signal an eines der SIP-Telefone Tel1, Tel2, Tel3 übertragen, während das Video-Signal auf einen der Personal Computer PC1, PC2, PC3 übertragen wird. In diesem Fall ist es sinnvoll, wenn das Hauskommunikations-Gateway GW1 eine Mitseh-Sperre-Funktion aufweist. Dazu besitzt der Prozessor IP_CPU eine Station-Zuordnungstabelle, in der zum Beispiel jedem SIP-Telefon Tel1, Tel2, Tel3 ein bestimmter Personal Computer PC1, PC2, PC3 zugeordnet wird. So könnte zum Beispiel dem SIP Telefon Tel1 der Personal Computer PC1 zugeordnet sein. Zunächst würde der Video-Datenstrom per IP-Multicast-Verbindung an alle Personal Computer PC1, PC2 und PC3 übertragen. Nach einem erfolgreichen Sprachverbindungsaufbau mit dem bestimmten SIP-Telefon Tel1 wird von der IP_CPU nur die Video-Datenstrom Verbindung für den zugeordneten Personal Computer PC1 aufrecht gehalten und die übrigen Video-Datenstrom Verbindungen zu den anderen Personal Computern PC2, PC3 abgebrochen. Außerdem ist es möglich, die fehlende Video-In Funktion der analogen Türstation TS2 durch ein digitales IP-Endgerät mit Video-In Funktion, wie zum Beispiel die IP- Kamera IP-Cam1, zu ergänzen. Hierzu wird, wie im vierten Anwendungsbeispiel oben beschrieben, das analoge Audio-Signal der Türstation TS2 in einen digitalen Audio-Datenstrom umgewandelt und mit dem digitalen Video-Datenstrom der IP-Video-Kamera IP-Cam1 zusammengeführt. Diese können dann wie oben beschrieben an die Personal Computer PC1, PC2, PC3 übertragen werden, oder an verschiedene IP-Endgeräte wie zum Beispiel einen Personal Computer PC1, PC2, PC3 und ein IP-Telefon Tel1, Tel2, Tel3 aufgeteilt werden. Oder die digitalen Audio- und Video-Datenströme können, wie im fünften Anwendungsbeispiel oben beschrieben, in ein analoges Audio-Signal und ein analoges Video-Signal umgewandelt und an die Wohnungsstation WS1 übertragen werden.

## Patentansprüche

1. Verfahren zur Verwendung in einem Hauskommunikations-Gateway (GW1) zur Kommunikation zwischen analogen Türstationen (TS1, TS2) und analogen Wohnungsstationen (WS1) an einem analogen Hauskommunikationsbus (TK_Bus_In, TK_Bus_Out) und digitalen IP-Endgeräten (PC1, PC2, PC3, Tel1, Tel2, Tel3) in einem IP-Netzwerk, wobei das an dem als Zweidraht-Bus-System ausgebildeten analogen Hauskommunikationsbus (TK_Bus_In, TK_Bus_Out) angeschlossene Hauskommunikations-Gateway (GW1) eine Kommunikation zwischen den an dem Hauskommunikationsbus (TK_Bus_In, TK_Bus_Out) angeschlossenen analogen Türstationen (TS1, TS2) und den an dem Hauskommunikationsbus (TK_Bus_In, TK_Bus_Out) angeschlossenen analogen Wohnungsstationen (WS1) und den an einer IP-Netzwerkschnittstelle (IP_Ethernet) angeschlossenen digitalen IP-Endgeräten überträgt (PC1, PC2, PC3, Tel1, Tel2, Tel3), wobei analoge Audio- und/oder Videosignale von dem Hauskommunikationsbus (TK_Bus_In, TK_Bus_Out) in digitale Audio- und/oder Video-Datenströme umgewandelt und über mindestens eine IP-Netzwerk-Schnittstelle (IP_Ethernet) an mindestens ein IP-Endgerät (PC1, PC2, PC3, Tel1, Tel2, Tel3) weitergeleitet werden;
**dadurch gekennzeichnet, dass** das Hauskommunikations-Gateway (GW1) einen digitalen Video-Datenstrom eines weiteren ersten IP-Endgerätes (IP-Cam1) von der IP-Netzwerk-Schnittstelle (IP_Ethernet) in ein analoges Video-Signal umwandelt und mit dem analogen Audio-Signal der analogen Türstation (TS1, TS2) von einer Hauskommunikationsbus-Schnittstelle (TK_Bus_In) zu einem analogen Audio/Video-Signal zusammenführt, wobei ein Prozessor (IP_CPU) des Hauskommunikations-Gateways (GW1) zunächst das analoge Audio-Signal in einen digitalen Audio-Datenstrom umwandelt und mit dem digitalen Video-Datenstrom zu einem zusammengeführten digitalen Audio/Video-Datenstrom verarbeitet und diesen in einen digitalen Video-Ausgangsdatenstrom und einen digitalen Audio-Ausgangsdatenstrom aufteilt und diese in ein analoges Video-Signal und ein analoges Audio-Signal umwandelt und als das analoge Audio/Video-Signal über eine andere Hauskommunikationsbus-Schnittstelle (TK_Bus_Out) an mindestens eine der analogen Wohnungsstationen (WS1) weiterleitet.

2. Verfahren zur Verwendung in einem Hauskommunikations-Gateway (GW1) zur Kommunikation zwischen analogen Türstationen (TS1, TS2) und analogen Wohnungsstationen (WS1) an einem analogen Hauskommunikationsbus (TK_Bus_In, TK_Bus_Out) und digitalen IP-Endgeräten (PC1, PC2, PC3, Tel1, Tel2, Tel3) in einem IP-Netzwerk, wobei das an dem als Zweidraht-Bus-System ausgebildeten analogen Hauskommunikationsbus (TK_Bus_In, TK_Bus_Out) angeschlossene Hauskommunikations-Gateway (GW1) eine Kommunikation zwischen den an dem Hauskommunikationsbus (TK_Bus_In, TK_Bus_Out) angeschlossenen analogen Türstationen (TS1, TS2) und den an dem Hauskommunikationsbus (TK_Bus_In, TK_Bus_Out) angeschlossenen analogen Wohnungsstationen (WS1) und den an einer IP-Netzwerkschnittstelle (IP_Ethernet) angeschlossenen digitalen IP-Endgeräten überträgt (PC1, PC2, PC3, Tel1, Tel2, Tel3), wobei ein digitaler Audio-Datenstrom eines IP-Endgerätes (PC1, PC2, PC3, Tel1, Tel2, Tel3) von dem IP-Netzwerk in ein analoges Audio-Signal umgewandelt und über den Hauskommunikationsbus (TK_Bus_In, TK_Bus_Out) an mindestens eine Türstation (TS1, TS2) oder Wohnungsstation (WS1) weitergeleitet wird,
**dadurch gekennzeichnet, dass** das Hauskommunikations-Gateway (GW1) einen digitalen Video-Datenstrom eines weiteren ersten IP-Endgerätes (IP-Cam1) von der IP-Netzwerk-Schnittstelle (IP_Ethernet) in ein analoges Video-Signal umwandelt und mit dem analogen Audio-Signal der analogen Türstation (TS1, TS2) von einer Hauskommunikationsbus-Schnittstelle (TK_Bus_In) zu einem analogen Audio/Video-Signal zusammenführt, wobei ein Prozessor (IP_CPU) des Hauskommunikations-Gateways (GW1) zunächst das analoge Audio-Signal in einen digitalen Audio-Datenstrom umwandelt und mit dem digitalen Video-Datenstrom zu einem zusammengeführten digitalen Audio/Video-Datenstrom verarbeitet und diesen in einen digitalen Video-Ausgangsdatenstrom und einen digitalen Audio-Ausgangsdatenstrom aufteilt und diese in ein analoges Video-Signal und ein analoges Audio-Signal umwandelt und als das analoge Audio/Video-Signal über eine andere Hauskommunikationsbus-Schnittstelle (TK_Bus_Out) an mindestens eine der analogen Wohnungsstationen (WS1) w iterleitet.

3. Verfahren nach Anspruch 1 oder 2,
**dadurch gekennzeichnet, dass** der digitale Video-Datenstrom des weiteren ersten IP-Endgerätes (IP-Cam1) oder eines umgewandelten analogen Video-Signals einer der Türstationen (TS1, TS2) und der digitale Audio-Datenstrom eines umgewandelten analogen Audio-Signals einer der Türstationen (TS1, TS2) parallel an zwei unterschiedliche digitale IP-Endgeräte (PC1, PC2, PC3, Tel1, Tel2, Tel3), und zwar der digitale Video-Datenstrom an ein zweites IP-Endgerät (PC1, PC2, PC3) mit Bild-Funktion und der digitale Audio-Datenstrom an ein drittes IP-Endgerät mit Sprach-Funktion (Tel1, Tel2, Tel3), weitergeleitet werden.

4. Verfahren nach eine der Ansprüche 1 bis 3,
**dadurch gekennzeichnet, dass** der digitale Audio- und/oder Video-Datenstrom über mindestens eine IP-Netzwerk-Schnittstelle (IP_Ethernet) als mehrere IP-Unicast-Streams oder ein IP-Multicast-Stream an mehrere IP-Endgeräte (PC1, PC2, PC3, Tel1, Tel2, Tel3) parallel oder als ein IP-Unicast-Stream an ein IP-Endgerät (PC1, PC2, PC3, Tel1, Tel2, Tel3) übertragen werden.

5. Verfahren nach einem der Ansprüche 1 bis 4,
**dadurch gekennzeichnet, dass** der digitale Audio-Datenstrom und der digitale Video-Datenstrom mit einer Zeitcodierung versehen werden und der Audio-Datenstrom zeitlich relativ zur Zeitcodierung des Video-Datenstroms um die Länge der Verarbeitungs- beziehungsweise Durchlaufszeitdifferenz verschoben wird, so dass der Video-Datenstrom und der Audio-Datenstrom lippensynchron zueinander angepasst sind.

6. Hauskommunikations-Gateway (GW1), zur Kommunikation zwischen analogen Türstationen (TS1, TS2) und analogen Wohnungsstationen (WS1) an einem als Zweidraht-Bus-System ausgebildeten analogen Hauskommunikationsbus (TK_Bus_In, TK_Bus_Out) und digitalen IP-Endgeräten (PC1, PC2, PC3, Tel1, Tel2, Tel3) in einem IP-Netzwerk, umfassend eine IP-Netzwerk-Schnittstelle (IP_Ethernet) und mindestens zwei Hauskommunikationsbusschnittstellen (TK_Bus_In, TK_Bus_Out),
**gekennzeichnet durch**
Mittel zur Umwandlung eines digitalen Video-Datenstroms eines weiteren ersten IP-Endgerätes (IP-Cam1) von der IP-Netzwerk-Schnittstelle (IP_Ethernet) in ein analoges Video-Signal, und Mittel zur Zusammenführung des analogen Video-Signals mit einem analogen Audio-Signal der Türstationen (TS1, TS2) von der ersten Hauskommunikationsbus-Schnittstelle (TK_Bus-In) zu einem analogen Audio/Video-Signal, wobei ein Prozessor (IP_CPU) des Hauskommunikations-Gateways (GW1) zunächst das analoge Audio-Signal in einen digitalen Audio-Datenstrom umwandelt und mit dem digitalen Video-Datenstrom zu einem zusammengeführten digitalen Audio/Video-Datenstrom verarbeitet und diesen in einen digitalen Video-Ausgangsdatenstrom und einen digitalen Audio-Ausgangsdatenstrom aufteilt und diese in ein analoges Video-Signal und analoges Audio-Signal umwandelt, und Mittel zur Weiterleitung des zusammengeführten analogen Audio/Video-Signals über die zweite Hauskommunikationsbus-Schnittstelle (TK_Bus_Out) an eine der Wohnungsstationen (WS1).

7. Hauskommunikations-Gateway (GW1) nach Anspruch 6,
**gekennzeichnet durch** eine zweite Hauskommunikationsbus-Schnittstelle zum Anschluss eines zweiten Hauskommunikationsbus (TK_Bus_Out) und einen Video-D/A-Wandler, und Mittel zur Umwandlung des digitalen Video-Datenstroms durch den Video-A/D-Wandler (Video_Encoder) in ein analoges Video-Signal und Mittel zur Ausgabe des analogen Video-Signals über die zweite Hauskommunikationsbus-Schnittstelle auf dem zweiten Hauskommunikationsbus (TK_Video_Out).

8. Hauskommunikations-Gateway (GW1) nach Anspruch 6,
**dadurch gekennzeichnet, dass** die für die analoge Video-Signalübertragung erforderlichen Einheiten, insbesondere eine Video-Eingangsstufe (TK_Video_In) und eine Vldeo-Ausgangsstufe (TK_Video_Out), alternativ aus dem Hauskommunikationsbus (TK_Bus_In, TK_Bus_Out) mit einer Spannung versorgt werden.

## Claims

1. Method for use in a home communication gateway (GW1) for communication between analogue door stations (TS1, TS2) and analogue residence stations (WS1) on an analogue home communication bus (TK_Bus_In, TK_Bus_Out) and digital IP terminals (PC1, PC2, PC3, Tel1, Tel2, Tel3) in an IP network, the home communication gateway (GW1) connected to the analogue home communication bus (TK_Bus_In, TK_Bus_Out) in the form of a two-wire bus system transmitting a communication between the analogue door stations (TS1, TS2) connected to the home communication bus (TK_Bus_In, TK_Bus_Out) and the analogue residence stations (WS1) connected to the home communication bus (TK_Bus_In, TK_Bus_Out) and the digital IP terminals (PC1, PC2, PC3, Tel1, Tel2, Tel3) connected to an IP network interface (IP_Ethernet), analogue audio and/or video signals from the home communication bus (TK_Bus_In, TK_Bus_Out) being converted into digital audio and/or video data streams and being forwarded to at least one IP terminal (PC1, PC2, PC3, Tel1, Tel2, Tel3) via at least one IP network interface (IP_Ethernet),
**characterized in that** the home communication gateway (GW1) converts a digital video data stream from a further first IP terminal (IP-Cam1) from the IP network interface (IP_Ethernet) into an analogue video signal and combines it with the analogue audio signal from the analogue door station (TS1, TS2) from a home communication bus interface (TK_Bus_In) to form an analogue audio/video signal, wherein a processor (IP_CPU) of the home communication gateway (GW1) first of all converts the analogue audio signal into a digital audio data stream and processes it with the digital video data stream to form a combined digital audio/video data stream and splits this into a digital video output data stream and a digital audio output data stream and converts these into an analogue video signal and an analogue audio signal and forwards them as the analogue audio/video signal to at least one of the analogue residence stations (WS1) via another home communication bus interface (TK_Bus_Out).

2. Method for use in a home communication gateway (GW1) for communication between analogue door stations (TS1, TS2) and analogue residence stations (WS1) on an analogue home communication bus (TK_Bus_In, TK_Bus_Out) and digital IP terminals (PC1, PC2, PC3, Tel1, Tel2, Tel3) in an IP network, the home communication gateway (GW1) connected to the analogue home communication bus (TK_Bus_In, TK_Bus_Out) in the form of a two-wire bus system transmitting a communication between the analogue door stations (TS1, TS2) connected to the home communication bus (TK_Bus_In, TK_Bus_Out) and the analogue residence stations (WS1) connected to the home communication bus (TK_Bus_In, TK_Bus_Out) and the digital IP terminals (PC1, PC2, PC3, Tel1, Tel2, Tel3) connected to an IP network interface (IP_Ethernet), a digital audio data stream from an IP terminal (PC1, PC2, PC3, Tel1, Tel2, Tel3) from the IP network being converted into an analogue audio signal and being forwarded to at least one door station (TS1, TS2) or residence station (WS1) via the home communication bus (TK_Bus_ln, TK_Bus_Out),
**characterized in that** the home communication gateway (GW1) converts a digital video data stream from a further first IP terminal (IP-Cam1) from the IP network interface (IP_Ethernet) into an analogue video signal and combines it with the analogue audio signal from the analogue door station (TS1, TS2) from a home communication bus interface (TK_Bus_In) to form an analogue audio/video signal, wherein a processor (IP_CPU) of the home communication gateway (GW1) first of all converts the analogue audio signal into a digital audio data stream and processes it with the digital video data stream to form a combined digital audio/video data stream and splits this into a digital video output data stream and a digital audio output data stream and converts these into an analogue video signal and an analogue audio signal and forwards them as the analogue audio/video signal to at least one of the analogue residence stations (WS1) via another home communication bus interface (TK_Bus_Out).

3. Method according to Claim 1 or 2,
**characterized in that** the digital video data stream from the further first IP terminal (IP-Cam1) or of a converted analogue video signal from one of the door stations (TS1, TS2) and the digital audio data stream of a converted analogue audio signal from one of the door stations (TS1, TS2) are forwarded in a parallel manner to two different digital IP terminals (PC1, PC2, PC3, Tel1, Tel2, Tel3), to be precise the digital video data stream is forwarded to a second IP terminal (PC1, PC2, PC3) with an image function and the digital audio data stream is forwarded to a third IP terminal with a voice function (Tel1, Tel2, Tel3).

4. Method according to one of Claims 1 to 3,
**characterized in that** the digital audio data stream and/or video data stream is/are transmitted in a parallel manner to a plurality of IP terminals (PC1, PC2, PC3, Tel1, Tel2, Tel3) as a plurality of IP unicast streams or an IP multicast stream or is/are transmitted to one IP terminal (PC1, PC2, PC3, Tel1, Tel2, Tel3) as an IP unicast stream via at least one IP network interface (IP_Ethernet).

5. Method according to one of Claims 1 to 4,
**characterized in that** the digital audio data stream and the digital video data stream are provided with time coding and the audio data stream is temporally shifted relative to the time coding of the video data stream by the length of the processing or transit time difference, with the result that the video data stream and the audio data stream are matched to one another in a lip-synchronized manner.

6. Home communication gateway (GW1) for communication between analogue door stations (TS1, TS2) and analogue residence stations (WS1) on an analogue home communication bus (TK_Bus_In, TK_Bus_Out) in the form of a two-wire bus system and digital IP terminals (PC1, PC2, PC3, Tel1, Tel2, Tel3) in an IP network, comprising an IP network interface (IP_Ethernet) and at least two home communication bus interfaces (TK_Bus_ln, TK_Bus_Out),
**characterized by**
means for converting a digital video data stream from a further first IP terminal (IP-Cam1) from the IP network interface (IP_Ethernet) into an analogue video signal, and means for combining the analogue video signal with an analogue audio signal from the door stations (TS1, TS2) from the first home communication bus interface (TK_Bus_In) to form an analogue audio/video signal, wherein a processor (IP_CPU) of the home communication gateway (GW1) first of all converts the analogue audio signal into a digital audio data stream and processes it with the digital video data stream to form a combined digital audio/video data stream and splits this into a digital video output data stream and a digital audio output data stream and converts these into an analogue video signal and analogue audio signal, and means for forwarding the combined analogue audio/video signal to one of the residence stations (WS1) via the second home communication bus interface (TK_Bus_Out).

7. Home communication gateway (GW1) according to Claim 6,
**characterized by** a second home communication bus interface for connecting a second home communication bus (TK_Bus_Out) and a video D/A converter, and means for converting the digital video data stream into an analogue video signal by means of the video A/D converter (Video_Encoder), and means for outputting the analogue video signal on the second home communication bus (TK_Bus_Out) via the second home communication bus interface.

8. Home communication gateway (GW1) according to Claim 6,
**characterized in that** the units required for the analogue video signal transmission, in particular a video input stage (TK_Video_In) and a video output stage (TK_Video_Out), are alternatively supplied with a voltage from the home communication bus (TK_Bus_In, TK_Bus_Out).

## Revendications

1. Procédé destiné à être utilisé dans une passerelle de communication domestique (GW1) servant à la communication entre des stations de porte analogiques (TS1, TS2) et des stations de logement analogiques (WS1) sur un bus de communication domestique analogique (TK_Bus_In, TK_Bus_Out) et des terminaux IP numériques (PC1, PC2, PC3, Tel1, Tel2, Tel3) dans un réseau IP, la passerelle de communication domestique (GW1), connectée au bus de communication domestique analogique (TK_Bus_In, TK_Bus_Out) réalisé sous la forme d'un système de bus bifilaire, transmettant une communication entre les stations de porte analogiques (TS1, TS2) connectées au bus de communication domestique (TK_Bus_In, TK_Bus_Out) et les stations de logement analogiques (WS1) connectées au bus de communication domestique (TK_Bus_In, TK_Bus_Out) ainsi que les terminaux IP numériques (PC1, PC2, PC3, Tel1, Tel2, Tel3) connectés à une interface de réseau IP (IP_Ethernet), des signaux audio et/ou vidéo analogiques étant convertis par le bus de communication domestique (TK_Bus_In, TK_Bus_Out) en flux de données audio et/ou vidéo numériques et transférés à au moins un terminal IP (PC1, PC2, PC3, Tel1, Tel2, Tel3) par le biais d'au moins une interface de réseau IP (IP_Ethernet),
**caractérisé en ce que** la passerelle de communication domestique (GW1) convertit un flux de données vidéo numériques d'un premier terminal IP supplémentaire (IP-Cam1) provenant de l'interface de réseau IP (IP_Ethernet) en un signal vidéo analogique et l'assemble avec le signal audio analogique de la station de porte analogique (TS1, TS2) provenant d'une interface de bus de communication domestique (TK_Bus_In) en un signal audio/vidéo analogique, un processeur (IP_CPU) de la passerelle de communication domestique (GW1) convertissant d'abord le signal audio analogique en un flux de données audio numérique et le traitant avec le flux de données vidéo numérique pour obtenir un flux de données audio/vidéo numérique assemblé et divise celui-ci en un flux de données de sortie vidéo numérique et un flux de données de sortie audio numérique et les convertit en un signal vidéo analogique et un signal audio analogique puis le transfère sous forme de signal audio/vidéo analogique par le biais d'une autre interface de bus de communication domestique (TK_Bus_Out) à au moins l'une des stations de logement analogiques (WS1).

2. Procédé destiné à être utilisé dans une passerelle de communication domestique (GW1) servant à la communication entre des stations de porte analogiques (TS1, TS2) et des stations de logement analogiques (WS1) sur un bus de communication domestique analogique (TK_Bus_In, TK_Bus_Out) et des terminaux IP numériques (PC1, PC2, PC3, Tel1, Tel2, Tel3) dans un réseau IP, la passerelle de communication domestique (GW1), connectée au bus de communication domestique analogique (TK_Bus_In, TK_Bus_Out) réalisé sous la forme d'un système de bus bifilaire, transmettant une communication entre les stations de porte analogiques (TS1, TS2) connectées au bus de communication domestique (TK_Bus_In, TK_Bus_Out) et les stations de logement analogiques (WS1) connectées au bus de communication domestique (TK_Bus_In, TK_Bus_Out) ainsi que les terminaux IP numériques (PC1, PC2, PC3, Tel1, Tel2, Tel3) connectés à une interface de réseau IP (IP_Ethernet), un flux de données audio numériques d'un terminal IP (PC1, PC2, PC3, Tel1, Tel2, Tel3) provenant du réseau IP étant converti en un signal audio analogique puis transféré par le biais du bus de communication domestique (TK_Bus_In, TK_Bus_Out) à au moins une station de porte (TS1, TS2) ou station de logement (WS1),
**caractérisé en ce que** la passerelle de communication domestique (GW1) convertit un flux de données vidéo numériques d'un premier terminal IP supplémentaire (IP-Cam1) provenant de l'interface de réseau IP (IP_Ethernet) en un signal vidéo analogique et l'assemble avec le signal audio analogique de la station de porte analogique (TS1, TS2) provenant d'une interface de bus de communication domestique (TK_Bus_In) en un signal audio/vidéo analogique, un processeur (IP_CPU) de la passerelle de communication domestique (GW1) convertissant d'abord le signal audio analogique en un flux de données audio numérique et le traitant avec le flux de données vidéo numérique pour obtenir un flux de données audio/vidéo numérique assemblé et divise celui-ci en un flux de données de sortie vidéo numérique et un flux de données de sortie audio numérique et les convertit en un signal vidéo analogique et un signal audio analogique puis le transfère sous forme de signal audio/vidéo analogique par le biais d'une autre interface de bus de communication domestique (TK_Bus_Out) à au moins l'une des stations de logement analogiques (WS1).

3. Procédé selon la revendication 1 ou 2, **caractérisé en ce que** le flux de données vidéo numériques du premier terminal IP supplémentaire (IP-Cam1) ou d'un signal vidéo analogique converti de l'une des stations de porte (TS1, TS2) et le flux de données audio numériques d'un signal audio analogique converti de l'une des stations de porte (TS1, TS2) sont transférés en parallèle à deux terminaux IP numériques (PC1, PC2, PC3, Tel1, Tel2, Tel3) différents, à savoir le flux de données vidéo numériques est transféré à un deuxième terminal IP (PC1, PC2, PC3) doté d'une fonction d'image et le flux de données audio numériques est transféré à un troisième terminal IP (Tel1, Tel2, Tel3) doté d'une fonction de parole.

4. Procédé selon l'une des revendications 1 à 3, **caractérisé en ce que** le(s) flux de données audio et/ou vidéo numériques est/sont transmis par le biais d'au moins une interface de réseau IP (IP_Ethernet) sous la forme de plusieurs flux d'unidiffusion IP ou d'un flux de multidiffusion IP à plusieurs terminaux IP (PC1, PC2, PC3, Tel1, Tel2, Tel3) en parallèle ou sous la forme d'un flux d'unidiffusion IP à un terminal IP (PC1, PC2, PC3, Tel1, Tel2, Tel3).

5. Procédé selon l'une des revendications 1 à 4, **caractérisé en ce que** le flux de données audio numériques et le flux de données vidéo numériques sont dotés d'un codage temporel et le flux de données audio est décalé dans le temps par rapport au codage temporel du flux de données vidéo de la longueur de la différence de temps de traitement ou de passage, de sorte que le flux de données vidéo et le flux de données audio soient adaptés l'un à l'autre avec synchronisation labiale.

6. Passerelle de communication domestique (GW1) servant à la communication entre des stations de porte analogiques (TS1, TS2) et des stations de logement analogiques (WS1) sur un bus de communication domestique analogique (TK_Bus_In, TK_Bus_Out) réalisé sous la forme d'un système de bus bifilaire et des terminaux IP numériques (PC1, PC2, PC3, Tel1, Tel2, Tel3) dans un réseau IP, comprenant une interface de réseau IP (IP_Ethernet) et au moins deux interfaces de bus de communication domestique (TK_Bus_In, TK_Bus_Out),
**caractérisée par**
des moyens destinés à convertir un flux de données vidéo numériques d'un premier terminal IP supplémentaire (IP-Cam1) provenant de l'interface de réseau IP (IP_Ethernet) en un signal vidéo analogique, et des moyens pour assembler le signal vidéo analogique avec un signal audio analogique des stations de porte (TS1, TS2) provenant de la première interface de bus de communication domestique (TK_Bus_In) en un signal audio/vidéo analogique, un processeur (IP_CPU) de la passerelle de communication domestique (GW1) convertissant d'abord le signal audio analogique en un flux de données audio numérique et le traitant avec le flux de données vidéo numérique pour obtenir un flux de données audio/vidéo numérique assemblé et divise celui-ci en un flux de données de sortie vidéo numérique et un flux de données de sortie audio numérique et les convertit en un signal vidéo analogique et un signal audio analogique et des moyens pour transférer le signal audio/vidéo analogique assemblé par le biais de la deuxième interface de bus de communication domestique (TK_Bus_Out) à l'une des stations de logement (WS1).

7. Passerelle de communication domestique (GW1) selon la revendication 6, **caractérisée par** une deuxième interface de bus de communication domestique destinée à la connexion d'un deuxième bus de communication domestique (TK_Bus_Out) et un convertisseur N/A vidéo, et des moyens destinés à la conversion du flux de données vidéo numériques par le convertisseur N/A vidéo (Video_Encoder) en un signal vidéo analogique et des moyens destinés à délivrer le signal vidéo analogique par le biais de la deuxième interface de bus de communication domestique sur le deuxième bus de communication domestique (TK_Bus_Out).

8. Passerelle de communication domestique (GW1) selon la revendication 6, **caractérisée en ce que** les unités nécessaires à la transmission du signal vidéo analogique, notamment un étage d'entrée vidéo (TK_Video_In) et un étage de sortie vidéo (TK_Video_Out), sont alimentées en tension en alternative depuis le bus de communication domestique (TK_Bus_In, TK_Bus_Out).
